Europäisches Patentamt

European Patent Office

Office européen des brevets

(19)

(11) Numéro de publication : **0 035 114**
**B1**

(12) **FASCICULE DE BREVET EUROPÉEN**

(45) Date de publication du fascicule du brevet :
26.09.84

(51) Int. Cl.³ : **A 01 D 85/00**

(21) Numéro de dépôt : 81100565.1

(22) Date de dépôt : 27.01.81

(54) Machine à presser la paille, le foin et similaires en balles.

(30) Priorité : 25.02.80 IT 2015180

(43) Date de publication de la demande :
09.09.81 Bulletin 81/36

(45) Mention de la délivrance du brevet :
26.09.84 Bulletin 84/39

(84) Etats contractants désignés :
AT BE DE FR GB NL SE

(56) Documents cités :
DE-A- 2 626 263
FR-A- 2 247 156
FR-A- 2 313 861
US-A- 4 121 513

(73) Titulaire : **GIOVANNI ABBRIATA - MACCHINE AGRI-
COLE S.r.l.**
**Via F.lli Rosselli, 2**
**I-15079 Sezzadio (Alessandria) (IT)**

(72) Inventeur : **Sconfienza, Renato**
**Via Guidobono, 27**
**I-10137 Turin (IT)**
Inventeur : **Abbriata, Gian Maria**
**Via F.lli Rosselli, 2**
**I-15079 Sezzadio (Alessandria) (IT)**

(74) Mandataire : **Racheli, Adele**
**ING. A. RACHELI & C. Viale San Michele del Carso 4**
**I-20144 Milano (IT)**

## Description

On connaît déjà différents types de presses rotatives ou presses, en particulier celles qui sont traînées par les tracteurs agricoles, pour la récolte et le pressage en balles cylindriques de produits agricoles fibreux, tels que le foin, la paille et similaires.

Ces presses se subdivisent en deux types fondamentaux.

Dans le premier type, par exemple Vermeer, brevet USA 3 722 197, la chambre de compression, à volume variable, est essentiellement formée par une série de courroies sans fin, parallèles et écartées entre elles, supportées par des rouleaux mobiles qui modifient leur parcours.

Dans ce type on exerce constamment une certaine pression sur la balle, qui est rendue compacte dès le commencement de l'opération, et par cela, à cause du manque d'aération, des phénomènes de fermentation et de auto-combustion s'engendrent facilement dans le temps. En outre les produits les plus délicats sont écrasés par la pression exercée sur la balle, dès le commencement du mouvement de rotation, avec des pertes notables qui suivent dans le cas de produits secs et avec des feuilles.

En augmentant le diamètre de la balle, la pression exercée sur la surface diminue, en produisant une balle toujours moins compacte vers l'extérieur, ce qui la rend facilement vulnérable aux agents atmosphériques.

Les deux rouleaux de tension qui pourvoient à la variation de longueur de la courroie, qui constitue l'élément primaire de la chambre de compression, non seulement sont très coûteux et compliqués, mais ils provoquent aussi une usure remarquable des courroies à cause des brusques et fréquentes variations de changement de direction.

Le second type, brevet allemand Welger 2 443 838, prévoit essentiellement une chambre de compression à volume constant, de forme presque cylindrique, les éléments convoyeurs étant disposés de façon fixe autour de ladite chambre. Ces éléments sont constitués par des rouleaux placés côté à côté ou par plusieurs petits rubans sans fin, contigus, qui s'enroulent sur des paires de rouleaux ayant une position fixe.

L'inconvénient qu'on rencontre dans ce type de presse rotative consiste en ce que seulement lorsque la balle a atteint son volume maximum, une pression périphérique est exercée sur celle-ci et, par conséquent, la compacité relative résultant est insuffisante. Ce résultat apporte non seulement un grand encombrement du produit emballé, mais aussi une grande facilité de perte, de déformation, et d'altérations du produit à cause des agents extérieurs. En outre il n'est pas possible d'obtenir des balles finies de diamètres différents, comme cela pourrait être nécessaire par exemple lorsqu'il n'y a plus de produit à presser.

Dans le US-A-4 121 513 une petite chambre est prévue, mais non pas entre les deux parties de bandes disposées vis-à-vis l'une de l'autre. En outre le noyau est soumis dès le départ aux deux sections de bandes sans fin qui exercent une pression sur la balle.

Dans le DE-A-2 626 263 quatre séries de bandes soient prévues. Celles-ci ont deux rouleaux en commun, de façon que les bandes d'une série soient intercalées avec celles de la série adjacente, de telle sorte que les pertes soient considérables. Toutefois on prévoit ici une certaine chambre initiale, mais la machine est de type complètement différent, la chambre de formation de la balle étant progressivement ouverte. Aucune compression considérable ne peut être exercée sur la balle, aussi bien parce que les bandes sont très espacées l'une de l'autre, que par le fait que la chambre de formation s'ouvre progressivement comprimant la balle seulement sur moins des deux tiers de sa périphérie.

L'objet principal de la présente invention est la formation d'une balle ayant un noyau simple. Cet objet a été atteint par la machine décrite dans la revendication 1.

Grâce à la presse rotative selon la présente invention, on obtient au contraire un noyau suffisamment doux ou moelleux, de façon à former une cheminée d'aération centrale, et une balle compacte pour un transport et un emmagasinage plus facile, une meilleure résistance aux agents extérieurs, une déformabilité plus petite et enfin une durée plus longue.

Une caractéristique intéressante de la machine est sa possibilité d'arrêter la formation de la balle à des valeurs intermédiaires de son diamètre, qui peut être par exemple d'environ 1 000 à 1 500 mm.

Les rouleaux d'entraînement des rubans continus peuvent être remplacés par des arbres avec des poulies.

Pour mieux comprendre la description et le fonctionnement on a joint, à titre d'exemple non limitatif, les dessins suivants, où :

la Figure 1 représente de façon schématique le mouvement des courroies de la presse rotative ;

la Figure 2 montre les dispositifs de tension automatique des rubans et la disposition des rouleaux dans la carcasse de la machine ;

la Figure 3 indique dans ses trois différentes phases 3A, 3B, 3C le fonctionnement de la presse rotative.

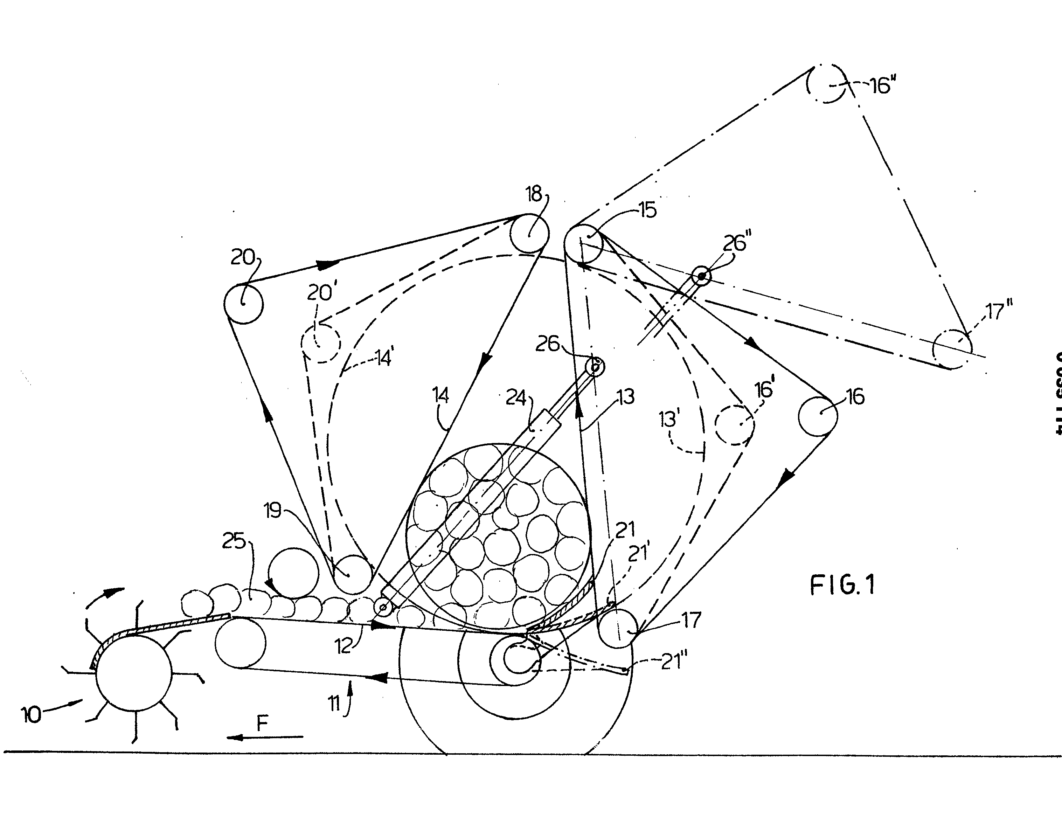

En se référant à la Figure 1, on a indiqué par la flèche F le sens d'avancement de la presse rotative traînée par un tracteur, non représenté.

Le produit agricole (par exemple paille, foin ou similaire) est prélevé par un ramasseur (10) de type connu, soulevé et entraîné par un convoyeur (11) vers la chambre de compression ; celle-ci est constituée par la partie supérieure (12) du ruban du convoyeur (11), et par deux séries de courroies (13 et 14). Chaque série est formée de bandes ou courroies qui roulent parallèlement entre elles ; elles suivent initialement un parcours triangulaire, sur chaque jeu de rouleaux respectifs (15, 16, 17 et 18, 19, 20), montés selon les sommets de deux triangles isocèles, dont les bases, délimitées par les rouleaux (15, 17 et 18, 19), ont une longueur plus grande d'un cinquième de la longueur des deux côtés égaux (15, 16 ; 16, 17 ; et 18, 20 ; 20, 19).

Cet ensemble constitue l'élément flexible et déformable formateur de la balle et qui permet de régler à volonté la compacité intérieure de la balle finie, de sorte qu'elle répond aux récentes conditions demandées par le marché, et précisément : une compacité plus grande à la périphérie à fin de garantir une bonne imperméabilité aux liquides atmosphériques et une stabilité superficielle du produit qui forme la balle.

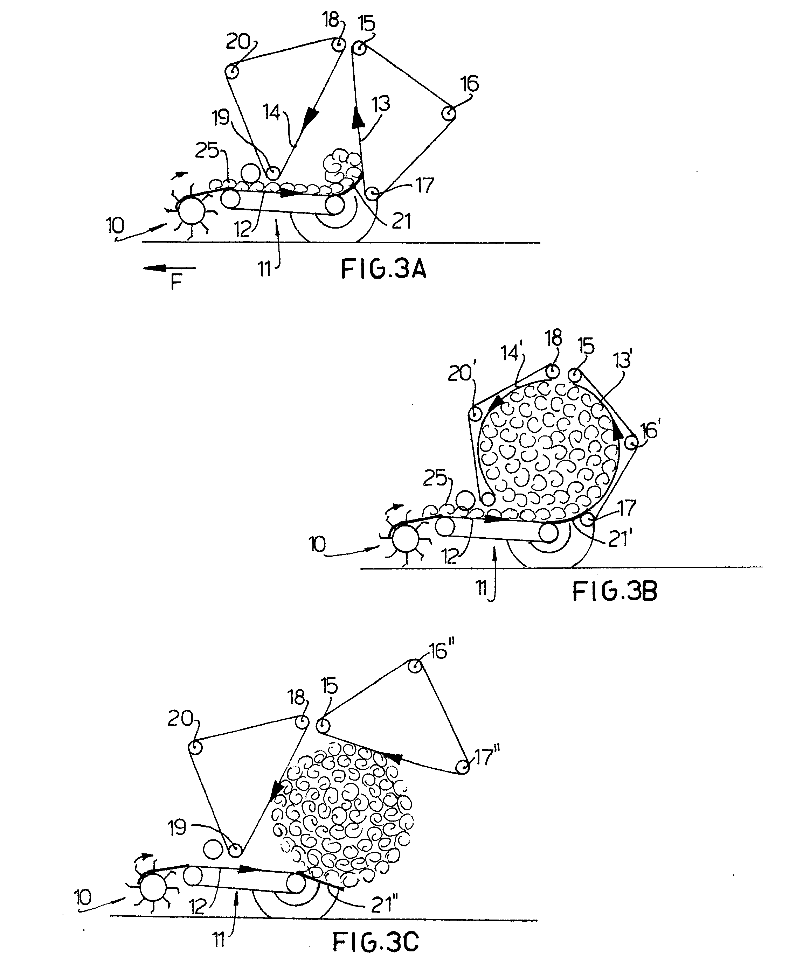

Un déflecteur (21) guide le petit matelas (25) de produit placé sur le ruban 12 du convoyeur vers la courroie (13) du « module » arrière, qui commence l'enroulement du produit (paille ou foin) sans le comprimer (Fig. 3A) jusqu'à ce que le noyau de la balle atteint une dimension telle à entrer en contact avec la série des courroies avant (14) (Fig. 1 et 3A). Comme on le voit sur les dessins, les deux séries de courroies ou rubans (13 et 14) roulent sur des rouleaux ou poulies de support, dans le sens indiqué par les flèches et par friction obligent le produit de la balle en formation à tourner à l'intérieur de la chambre centrale qui s'élargit à cause de la masse de produit comprimé uniformément entre les séries de courroies (13' et 14') (Fig. 3B).

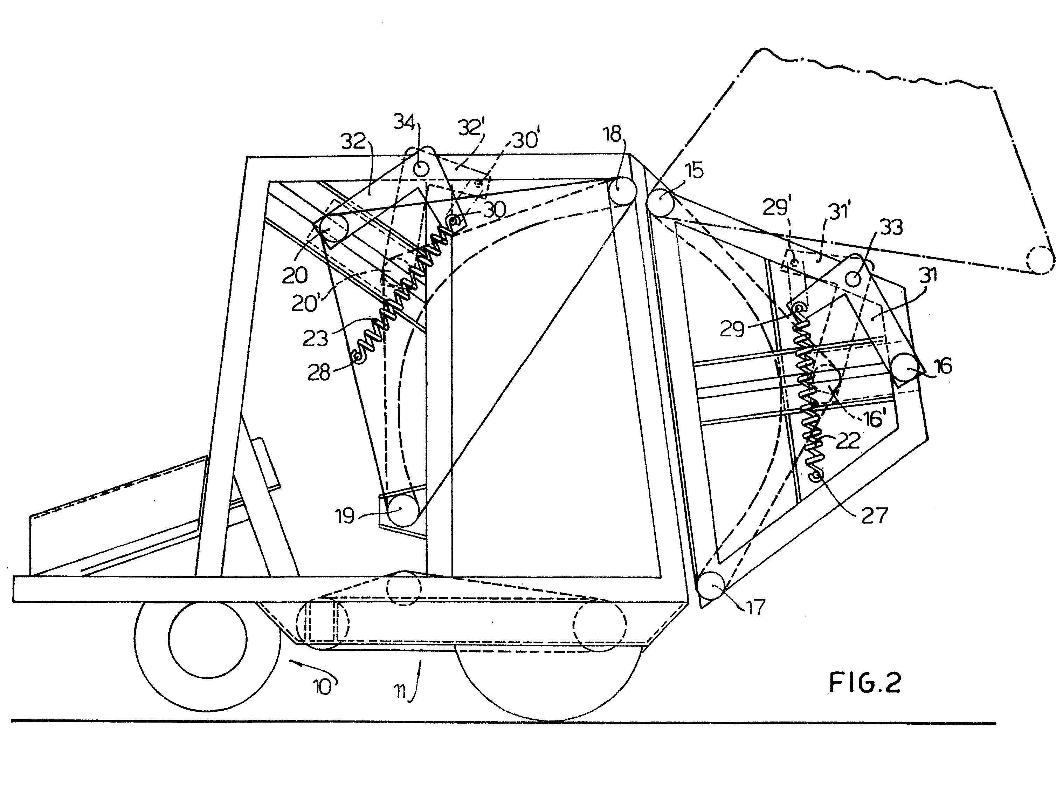

Sur la Fig. 2 on a représenté schématiquement deux ressorts à traction (22 et 23), qui sont ancrés par une extrémité (27, 28) à un point fixe du bâti de la presse rotative, et à l'autre extrémité (29, 30) respectivement à des leviers en équerre (31, 32). Lesdits leviers (31, 32) tournent autour des pivots (33, 34) solidaires du bâtiment de la presse rotative. Lorsque les rouleaux 16, 20 se trouvent à leur position initiale, les leviers à équerre prennent les positions indiquées sur la figure 2 par une ligne continue.

Sur la même Figure 2 on a indiqué en lignes pointillées les leviers à leur position de déplacement maximum (31' et 32') où les ressorts (22 et 23) sont soumis à la tension maximale.

Lorsque la balle dépasse les dimensions permises par les courroies tendues (13 et 14) en vainquant l'action des ressorts (22 et 23), indiqués sur la Figure 2, les rouleaux (16 et 20) subissent un déplacement dans la direction du centre de la chambre de compression vers les positions (16' et 20'). Par conséquent on relâche la portion intérieure des courroies (13 et 14) qui, forcées par la balle en cours de croissance, sont obligées à un parcours concave vers l'intérieur, jusqu'à prendre la forme circulaire (13', 14') indiquée par des lignes pointillées sur la Figure 1 et schématisée sur la Figure 3B à laquelle correspond le déplacement maximum.

La balle obtenue par la presse rotative selon la présente invention a donc des avantages en comparaison des systèmes similaires connus, dont elle élimine les inconvénients.

Il faut remarquer en particulier que le nouveau dispositif dans son ensemble est très simplifié et donc de coût bas, et que les courroies ont une durée plus longue, parce qu'elles coulissent autour des trois rouleaux respectifs (ou poulies) de support, qui tournent toujours dans le même sens.

En ouvrant le module postérieur avant que les courroies soient parvenues à leur position (13', 14'), on peut obtenir des dimensions différentes de la balle finie.

La presse rotative est traînée par un tracteur agricole, non représenté, duquel elle reçoit, à travers une prise de force, l'énergie pour les différents mouvements de récolte et pressage.

La récolte est réalisée au moyen d'un appareil de type traditionnel (10) avec une roue ramasseuse, des ressorts de chargement et des couloirs pour le transport du produit.

Le ramasseur est placé en avant à 90° par rapport à l'axe longitudinal de la machine, ayant son point d'appui sur la poulie d'alimentation du mouvement, de façon à pouvoir être soulevé ou abaissé.

Le convoyeur, placé horizontalement, ayant une petite pente vers la partie arrière, constitue la base de la chambre centrale de compression à volume variable, qui initialement a une forme triangulaire.

Les deux « modules » déformables, dont l'un avant est fixe et l'autre arrière est déplaçable vers le haut pour le déchargement de la balle, comprennent chacun les trois rouleaux ou poulies (15, 16, 17 et 18, 19, 20) respectivement placés aux sommets des triangles, formés par lesdites séries de courroies. Deux (15, 17 ; 18, 19) de ces rouleaux sont fixes et rendus moteurs au moyen de chaînes et de roues dentées appropriées, tandis qu'un mobile est calé sur un levier ayant son point d'appui en 33 et 34 ; celui-ci fonctionne comme rouleau de renvoi et il est poussé par des ressorts de traction (22 et 23) montés de chaque côté de la machine.

Une pluralité de courroies adjacentes et parallèles roulent sur les trois rouleaux de chaque « module » et constituent les parois de la chambre de compression. Lorsque le produit à emballer, alimenté de façon continue par le ramasseur (10), est poussé contre la paroi arrière de la chambre centrale de compression par le convoyeur (11, 12), les courroies (13) du « module » arrière déterminent dans le produit lui-même un mouvement rotatif en commençant la formation d'une balle presque cylindrique. Lorsque la balle augmente, le produit entre en contact avec les courroies (14) du « module » avant. A ce point la pression de la balle sur les courroies tend les deux grands ressorts et fait rapprocher les rouleaux mobiles, tandis que la portion de courroie (13', 14') en contact avec la balle se courbe jusqu'à atteindre le diamètre de la balle finie.

Lorsque la formation de la balle est terminée, un signal optique ou acoustique actionné par le levier de tensionnement du cylindre mobile du « module » avant, avertit l'opérateur, qui, actionne le levier de commande du distributeur des cylindres hydrauliques d'ouverture du « module » arrière, après avoir réalisé la phase de liage au moyen de procédés connus.

Les cylindres hydrauliques commencent la course d'ouverture du « module » arrière, tandis que les courroies du module avant, en se détendant poussent graduellement la balle et la font sortir, de sorte qu'elle roule au sol. Lorsque la grande ouverture est fermée, un nouveau cycle de récolte et formation de la balle peut commencer à nouveau.

**Revendications**

1. Machine à former des balles cylindriques de paille, foin ou similaires, par rotation du produit dans une chambre de compression expansible et située à l'écart du sol, cette chambre étant munie d'une entrée pour l'introduction du produit et étant limitée sur sa base, ou partie inférieure, par la surface supérieure roulante du convoyeur d'alimentation (12), l'équipement de délimitation de la chambre comprenant, en outre, pour ses côtés avant et arrière et sa partie supérieure, un ensemble formant un espace clos durant la formation de la balle et formé de deux modules disposés face à face, l'un avant fixe et l'autre arrière apte à pivoter vers le haut et vers l'arrière par rapport à un point disposé à sa partie supérieure pour le déchargement de la balle, chaque module étant pourvu d'une série unique de bandes ou courroies sans fin (13, 14) réparties sur toute la largeur de la chambre le long de rouleaux de guidage (15, 16, 17 ; 18, 19, 20), les bandes ou courroies sans fin étant soumises à des moyens de tension (22, 23) agissant sur des rouleaux de guidage mobiles et permettant ainsi la déviation curviligne des parties en vis-à-vis des bandes ou courroies sans fin, qui délimitent à proprement parler la chambre de compression expansible avec le convoyeur (12) et qui circulent en sens inverse de manière à participer à la formation de la balle, caractérisée :

— en ce que ces parties en vis-à-vis des bandes ou courroies sans fin (13, 14), qui délimitent la chambre de compression expansible, sont, au début du processus de formation, espacées entre elles de façon à former, avec le convoyeur (12), une chambre d'un volume tel que le noyau de balle n'est pris en charge que par la série de bandes ou courroies sans fin (13) la plus proche de la sortie du convoyeur d'alimentation (12).

2. Machine selon la revendication 1, caractérisée en ce que la déformation et la pression exercée par chaque série de bandes ou courroies sans fin (13, 14) sont réalisés uniquement par un seul moyen de tension (22, 23) agissant sur un rouleau de guidage mobile (16, 20).

3. Machine selon la revendication 1 ou 2, caractérisée en ce que chaque série de bandes ou courroies (13, 14) n'est supportée que par trois rouleaux (15, 16, 17 ; 18, 19, 20).

4. Machine selon la revendication 3, caractérisée en ce que les trois rouleaux (15, 16, 17 ; 18, 19, 20) de chaque série de bandes ou courroies (13, 14) forment, dans leur ensemble, un triangle isocèle.

5. Machine selon la revendication 4, caractérisée en ce que le rouleau de guidage mobile (16, 20) soumis aux moyens de tension (22, 23) est le rouleau situé au sommet du triangle isocèle, dont la base est formée des parties en vis-à-vis des bandes ou courroies (13, 14).

6. Machine selon la revendication 4 ou 5, caractérisée en ce que la base du triangle isocèle a une longueur plus grande d'un cinquième de la longueur des deux côtés égaux.

7. Machine selon une quelconque des revendications précédentes, caractérisée en ce que les moyens de tension (22, 23) sont appliqués aux rouleaux de guidage mobiles par des leviers en équerre (31, 32).

**Claims**

1. A machine for making cylindric bales of straw, hay and the like by rotating the product in an expansible compression chamber which is located at a distance from the ground, said chamber being provided with an inlet for the product introduction, said chamber being limited, at its base or lower part, by the upper movable surface of the feeding conveyor (12), the equipment limiting said chamber moreover comprising, on its front and rear sides and on its upper part, a whole forming a closed space during the formation of the bale and consisting of two modules which are arranged on in front of the other, the front one being fix and the rear one capable to rotate upwards and backwards around a point arranged on its upper portion for discharging the bale ; each module being provided with a single series of endless bands or belts (13, 14) arranged on the whole width of the chamber along the guide rollers (15, 16, 17 ; 18, 19 and 20), the endless bands or belts undergoing tension means (22, 23) acting on movable guide rollers, so as to allow the curvilinear deviation of the opposing parts of the endless bands or belts actually limiting with the conveyor (12), the expansible compression chamber and moving in the opposite direction in such a way as to participate to the formation of the bale, characterized in that the opposite parts of the endless bands or belts (13, 14) limiting the expansible compression chamber, are — at the beginning of the formation process —, spaced from each other as to form, with the conveyor (12), a chamber having such a volume that the bale core is only treated by the series of the endless bands or belts (13) which is nearer to the outlet of the feeding conveyor (12).

2. A machine according to claim 1, characterized in that the deformation and the pressure exerted by each series of endless bands or belts (13, 14) are only carried out by a single tension means (22, 23) acting on a moveable guide roller (16, 20).

3. A machine according to claim 1 or 2, characterized in that each series of bands or belts (13, 14) is only supported by three rollers (15, 16, 17 ; 18, 19, 20).

4. A machine according to claim 3, characterized in that the three rollers (15, 16, 17 ; 18, 19, 20) of each series of bands or belts (13, 14) form in their whole, an isosceles triangle.

5. A machine according to claim 4, characterized in that the moveable guide roller (16, 20) biased by the tension means (22, 23) is the roller arranged at the apex of the isosceles triangle, the basis of which is formed by the opposing parts of the bands or belts (13, 14).

6. A machine according to claim 4 or 5, characterized in that the isosceles triangle base has a length longer than a fifth of the length of the two equal sides.

7. A machine according to any of the preceding claims characterized in that the tension means (22, 23) are applied to the moveable guide rollers by means of a levers (31, 32).

**Ansprüche**

1. Maschine zum Bilden von zylindrischen Stroh- und Heubündeln und dgl. durch Drehen des Materials im Preßraum, der ausdehnbar und in einem gewissen Abstand vom Boden angeordnet ist, wobei dieser Raum einen Eingang zum Einbringen des Materials aufweist und auf seinem Boden, d. h. auf dem unteren Teil der oberen beweglichen Fläche des Zufuhrförderers (12) begrenzt ist und außerdem die Ausrüstung zum Begrenzen des Raums auf der Vorderseite und Rückseite und auf dem oberen Teil ein Ganzes umfaßt, das einen geschlossenen Raum während des Bildens des Bündels bildet und aus zwei gegenüberliegenden Teilen besteht, wobei der vordere Teil fest und der rückwärtige Teil sich nach oben und nach hinten in Bezug auf eine auf dem oberen Teil zum Abladen des Ballens angeordnete Stelle drehen kann, wobei jeder Teil mit einer einzigen Reihe von endlosen Bändern oder Riemen (13, 14) versehen ist, die auf der ganzen Länge des Raumes der Führungsrollen (15, 16, 17 ; 18, 19, 20) entlang angeordnet sind und die endlosen Bänder oder Riemen Spannmitteln (22, 23) unterstellt sind, die auf die beweglichen Führungsrollen so wirken, daß auf diese Weise die kurvenlineare Abweichung der gegenüberliegenden Teile der endlosen Bänder oder Riemen, die mit dem Förderer (12) wirksam den sich ausbreitenden Preßraum begrenzen und sich in entgegengesetzter Richtung bewegen, um an der Bildung des Bündels teilzunehmen, dadurch gekennzeichnet, daß die gegenüberliegenden Teile der endlosen Bänder oder Riemen (13, 14), die den sich ausbreitenden Preßraum begrenzen, bei Beginn des Bildungsvorganges voneinander entfernt sind, um mit dem Förderer (12) einen Raum solchen Rauminhalts zu bilden, daß der Kern des Bündels nur von der Reihe der endlosen Bänder oder Riemen (13) behandelt wird, die dem Ausgang des Zufuhrförderers (12) am nächsten ist.

2. Maschine nach Anspruch 1, dadurch gekennzeichnet, daß die von jeder Reihe endloser Bänder oder Riemen (13, 14) ausgeübte Verformung und Pressung nur von einzem einzigen auf eine bewegliche Führungsrolle (16, 20) wirkenden Spannmittel (22, 23) verwirklicht wird.

3. Maschine nach Anspruch 1 oder 2, dadurch gekennzeichnet, daß jede Reihe von Bändern oder Riemen (13, 14) nur von drei Rollen (15, 16, 17 ; 18, 19, 20) abgestützt ist.

4. Maschine nach Anspruch 3, dadurch gekennzeichnet, daß die drei Rollen (15, 16, 17 ; 18, 19, 20) jeder Reihe von Bändern oder Riemen (13, 14) in ihrer Gesamtheit ein gleichschenkliges Dreieck bilden.

5. Maschine nach Anspruch 4, dadurch gekennzeichnet, daß die den Spannmitteln (22, 23) unterstellte bewegliche Führungsrolle (16, 20) die am Scheitel des gleichschenkligen Dreieckes, dessen Grundlinie von den gegenüberliegenden Seiten der Bänder oder Riemen (13, 14) gebildet ist, angeordnete Rolle ist.

6. Maschine nach Anspruch 4 oder 5, dadurch gekennzeichnet, daß die Grundlinie des gleichschenkligen Dreieckes eine um ein Fünftel größere Länge als die Länge der beiden gleichen Schenkel hat.

7. Maschine nach einem der vorstehenden Ansprüche dadurch gekennzeichnet, daß die Spannmittel (22, 23) durch Winkelhebel (31, 32) auf den beweglichen Führungsrollen angebracht sind.

FIG.1

FIG.2

0 035 114

FIG.3A

FIG.3B

FIG.3C